# EUROPÄISCHE PATENTSCHRIFT

(11) **EP 3 957 517 B1**
(45) Veröffentlichungstag und Bekanntmachung des Hinweises auf die Patenterteilung: **09.10.2024**
(21) Anmeldenummer: 21185460.9
(22) Anmeldetag: 14.07.2021
(51) Int. Cl.: B60M 1/14

(54) **OBERLEITUNGSANLAGE MIT KREUZENDEN FAHRDRÄHTEN**
OVERHEAD CABLE SYSTEM WITH CROSSING WIRES
INSTALLATION DE LIGNE AÉRIENNE DE CONTACT AVEC FILS DE CONTACT CROISÉS

(30) Priorität: 17.08.2020 DE 102020210418
(43) Veröffentlichungstag der Anmeldung: 23.02.2022
(73) Patentinhaber: Siemens Mobility GmbH, 81739 München (DE)
(72) Erfinder: Dölling, Andre, 91056 Erlangen (DE); Schmieder, Axel, 04288 Leipzig (DE)
(74) Vertreter: Siemens Patent Attorneys

(56) Entgegenhaltungen:
- DE-A1- 19 860 218
- DE-A1- 4 042 215
- JP-B2- 3 346 813
- JP-U- S5 233 808

## Beschreibung

Die Erfindung betrifft eine Oberleitungsanlage mit kreuzenden Fahrdrähten.

Oberleitungsanlagen stellen die kontinuierliche Versorgung eines elektrischen Triebfahrzeugs, insbesondere Schienenfahrzeugs, mit elektrischer Energie sicher. Dazu müssen auch Bereiche mit Weichen oder Kreuzungen, mit Oberleitungsanlagen so überspannt sein, dass ein Stromabnehmer eines Fahrzeugs, insbesondere Schienenfahrzeugs, zuverlässig unterhalb der Fahrdrähte geführt wird und zusätzlich eine permanente, bidirektionale Stromübertragung sowohl zum als auch vom Fahrzeug möglich ist.

Dazu gibt es grundsätzlich die zwei Möglichkeiten einer kreuzenden oder einer tangentialen Bespannung.

Aus Gründen der Einfachheit und Flexibilität wurde und wird insbesondere im Bereich von Weichen im Schienenverkehr häufig eine kreuzende Weichenbespannung, meist unabhängig von der Bauart der Oberleitungsanlage, dem Querschnitt bzw. dem Leitermaterial des Fahrdrahtes, verwendet, bei der sich die entsprechenden, stromführenden Fahrdrähte kreuzen. In diesem Bereich wird üblicherweise ein starrer Kreuzungsstab verwendet, der mittels jeweils einer Befestigungsklemme an den Enden des Kreuzungsstabs mit einem der Fahrdrähte fest verbunden ist, wodurch eine Lücke zwischen Kreuzungsstab und verbundenem (Haupt-) Fahrdraht entsteht, durch die der zweite (Kreuzungs-) Fahrdraht verläuft und dabei oberhalb des anderen (Haupt-) Fahrdrahts diesen kreuzt.

In der DE 40 42 215 A1 wird eine Fahrdrahtkreuzung für Elektrofahrzeuge mit Stromabnehmerbügel beschrieben, bei der die Eckpunkte eines Rahmens aus Beidrähten gleitfähig mit den beiden sich kreuzenden Fahrdrähten verbunden sind. In der DE 198 60 218 A1 wird eine Vorrichtung zur Fahrdrahtführung im Bereich einer Fahrdrahtkreuzung beschrieben, welche eine Grundplatte aufweist, auf deren einen Seite ein Bügel derart befestigt ist, dass ein zwischen Bügel und Grundplatte befindlicher oberer Fahrdraht längs- und querbeweglich geführt ist.

Im Bereich, der sich kreuzenden Fahrdrähte kommt es bei der Durchfahrt von Schienenfahrzeugen mit vergleichsweise hohen Befahrgeschwindigkeiten und Leistungsaufnahmen infolge von entstehenden Schwingungen teilweise zu größeren Bewegungen der zwei Fahrdrähte gegeneinander, die u.U. eine, wenn auch nur kurzfristige Stromunterbrechung nach sich ziehen, wodurch sich elektrische Abrisslichtbögen ausbilden können, da die Fahrdrähte üblicherweise als blanke Leiter ausgeführt sind.

Dies zieht einen sehr starken Verschleiß an den Fahrdrähten durch Reduzierung des Querschnitts der Drähte und somit auch der Lebensdauer der Anlage nach sich. Dabei wird der Gesamtverschleiß, der sowohl mechanische als auch elektrische Ursachen hat, in der Regel zu einem überwiegenden Anteil vom elektrischen Verschleiß bestimmt, weil üblicherweise der elektrische Verschleiß den mechanischen Verschleiß um das 20fache überschreiten kann.

Der Erfindung liegt die Aufgabe zugrunde, eine Oberleitungsanlage anzugeben, bei der der Verschleiß an sich kreuzenden Fahrdrähten reduziert wird.

Gelöst wird die Aufgabe durch die Merkmale des unabhängigen Patentanspruchs 1. Weiterbildungen und Ausgestaltungen der Erfindung finden sich in den Merkmalen der abhängigen Patentansprüche wieder.

Dazu wird eine Oberleitungsanlage mit wenigstens einem Hauptfahrdraht, wenigstens einem Kreuzungsfahrdraht und wenigstens einem Kreuzungsstab angegeben, wobei der Kreuzungsstab mittels wenigstens einer Befestigungsvorrichtung mit dem Hauptfahrdraht verbunden ist, wobei sich der Hauptfahrdraht und der Kreuzungsfahrdraht im Bereich des Kreuzungsstabs kreuzen und wobei der Kreuzungsfahrdraht zwischen dem Kreuzungsstab und dem Hauptfahrdraht verläuft und bei der die wenigstens eine Befestigungsvorrichtung den Kreuzungsfahrdraht zwischen dem Kreuzungsstab und dem Hauptfahrdraht zumindest im Bereich des Kreuzungsstabs einspannt. Die Gesamtkonstruktion ist derart optimiert, dass eine möglichst konstante Elastizität im Bereich des Kreuzungsstabes und der Befestigungsvorrichtung erreicht wird, so dass diese äußerst vorteilhaft vergleichmäßigt wird.

Die erfindungsgemäße Lösung hat den Vorteil, dass im Kreuzungsbereich der Fahrdrähte in dem der Stromabnehmer des Fahrzeugs, insbesondere Schienenfahrzeugs, beide Fahrdrähte berührt und in beiden entsprechend ein Strom fließt, trotz sich ggf. bildender Schwingungen und zueinander gegenläufiger Bewegungen der Fahrdrähte, eine Stromunterbrechung und damit die Bildung von Abrisslichtbögen verhindert werden kann. Dadurch wird ein entsprechender Verschleiß der Fahrdrähte wirksam vermieden.

Nach einer besonders bevorzugten Ausführungsform der Erfindung ist der Kreuzungsfahrdraht mittels der wenigstens einen Befestigungsvorrichtung derart zwischen dem Kreuzungsstab und dem Hauptfahrdraht eingespannt, dass sich der Kreuzungsstab und der Kreuzungsfahrdraht und der Kreuzungsfahrdraht und der Hauptfahrdraht in jeweils wenigstens einem Punkt berühren. Bevorzugt ist der kürzeste Abstand zwischen der Unterseite des Kreuzungsstabs und der Oberseite des Hauptfahrdrahts höchstens gleich oder kleiner als der Durchmesser des Kreuzungsfahrdrahts zwischen dessen Oberseite und dessen Unterseite. Besonders bevorzugt ist der kürzeste Abstand zwischen der Unterseite des Kreuzungsstabs und der Oberseite des Hauptfahrdrahts im Bereich zwischen 0,1 bis 5mm geringer als der Durchmesser des Kreuzungsfahrdrahts zwischen dessen Oberseite und dessen Unterseite.

Über das Verspannen der stromführenden Leiter mittels der Befestigungsvorrichtung wird insbesondere der Kreuzungsfahrdraht zwischen Kreuzungsstab und Hauptfahrdraht eingespannt, bzw. eingeklemmt, wobei sich dadurch Kreuzungsstab und Kreuzungsfahrdraht sowie Kreuzungsfahrdraht und Hauptfahrdraht berühren. Dadurch wird eine entsprechende Kontaktkraft zwischen den Leitern aufgebaut, mittels der an den Berührungs- bzw. Kontaktpunkten jeweils ein leitender, stromfester Kontakt entsteht. Ist der kürzeste Abstand zwischen der Unterseite des Kreuzungsstabs und der Oberseite des Hauptfahrdrahts höchstens gleich oder insbesondere kleiner als der Durchmesser des Kreuzungsfahrdrahts zwischen dessen Oberseite und dessen Unterseite, erhöht sich entsprechend die Kontaktkraft an den Berührungsstellen, wodurch der Übergangswiderstand verringert und somit wiederum die Entstehung von Lichtbögen vermieden, bzw. zumindest reduziert wird. Um die Entstehung von Lichtbögen zu minimieren, ist es besonders vorteilhaft, wenn der kürzeste Abstand im Bereich zwischen 0,1 bis 5mm geringer als der Durchmesser des Kreuzungsfahrdrahts zwischen der Oberseite und der Unterseite ist, da in diesem Bereich eine besonders optimale Kontaktkraft aufgebaut wird. Nach einer weiteren besonders bevorzugten Ausführungsform der Erfindung ist der Abstand zwischen dem Kreuzungsstab und dem Hauptfahrdraht mittels der wenigstens einen Befestigungsvorrichtung einstellbar. Bevorzugt weist die wenigstens eine Befestigungsvorrichtung wenigstens zwei Schrauben auf, mittels derer der Abstand zwischen dem Kreuzungsstab und dem Hauptfahrdraht einstellbar ist.

Dies hat den Vorteil, dass der Kreuzungsstab höhenregulierbar auf dem Hauptfahrdraht befestigt ist, d.h., die Befestigungsteile der erfindungsgemäßen Befestigungsvorrichtung zum Einklemmen des Kreuzungsfahrdrahts sind so gestaltet, dass eine Regulierung, bzw. Einstellung des Abstands zwischen Kreuzungsstabunterkante und Hauptfahrdrahtoberkante möglich ist. Damit wird sowohl eine wesentlich exaktere Justierung des Abstandes zwischen Kreuzungsstabunterkante und Hauptfahrdrahtoberkante als auch die Möglichkeit einer entsprechenden Nachregulierbarkeit des Abstandes, z.B. bei Verschleiß des Kreuzungsfahrdrahtes, erreicht.

Die Einstellbarkeit der Befestigungsvorrichtung ist besonders einfach beispielsweise durch wenigstens zwei Schrauben erreichbar, die als Bestandteile der Befestigungsvorrichtung hierzu auf jeweils einer Seite des Kreuzungsstabs auf dem Kreuzungsstab aufsitzen, bzw. sich darauf abstützen, wobei durch Drehen der Schrauben der gewünschte Abstand einstellbar ist. Die Befestigungsvorrichtung stützt sich hierzu bevorzugt auf den Befestigungsrillen des Hauptfahrdrahts ab.

Hier sind aber auch alle adäquaten, anderen Lösungen, wie z.B. der Einsatz von Federn, etc. denkbar und möglich. So kann beispielsweise der Kreuzungsstab über eine oder mehrere, vertikale Feder(n) gegen den Kreuzungsfahrdraht gepresst werden, sodass dessen Einspannkraft auch bei Querschnittsminderung bei Verschleiß annähernd gleich ist. Die Federkraft kann wiederum ebenfalls justierbar gestaltet sein. Die Federn können dabei an den Befestigungen des Kreuzungsstabes auf dem Hauptfahrdraht angeordnet sein.

Weiterhin kann beispielsweise auch der Kreuzungsstab beidseitig auf Gewindebolzen oder eine Kulissenführung aufgesetzt werden, die mit dem Hauptfahrdraht verklemmt werden, wodurch wiederum der Kreuzungsfahrdraht entsprechend eingespannt, bzw. verspannt, bzw. eingeklemmt wird und somit auch der Kontakt, insbesondere die notwendige Kontaktkraft zwischen den Leitern hergestellt werden kann.

Nach einer weiteren bevorzugten Ausführungsform der Erfindung ist mittels der wenigstens einen Befestigungsvorrichtung eine Kraft auf die Berührungs- bzw. Kontaktpunkte zwischen dem Kreuzungsstab und dem Kreuzungsfahrdraht und dem Kreuzungsfahrdraht und dem Hauptfahrdraht ausübbar. Besonders bevorzugt ist die Kraft, die auf die Berührungs- bzw. Kontaktpunkte zwischen dem Kreuzungsstab und dem Kreuzungsfahrdraht und dem Kreuzungsfahrdraht und dem Hauptfahrdraht ausgeübt wird, einstellbar, wobei die Kraft bevorzugt mittels Schrauben oder Federn ausübbar ist, da dies besonders einfach realisiert bzw. umgesetzt werden kann. Über die vorher bereits beschriebene, erfindungsgemäße Befestigungsvorrichtung, mittels der eine Höhenregulierung, bzw. Einstellung des Abstandes zwischen Kreuzungsstabunterkante und Hauptfahrdrahtoberkante möglich ist, wird vorteilhafterweise auch eine Kraft auf die Berührungs- bzw. Kontaktpunkte zwischen dem Kreuzungsstab und dem Kreuzungsfahrdraht und dem Kreuzungsfahrdraht und dem Hauptfahrdraht ausgeübt, wobei die Kraft dementsprechend auch einstellbar ist und mittels der an den Berührungs- bzw. Kontaktpunkten jeweils ein leitender, stromfester Kontakt entsteht. Somit wird ebenfalls sowohl eine wesentlich exaktere Justierung der Kraft auf die oben genannten Berührungs- bzw. Kontaktpunkte als auch die Möglichkeit einer entsprechenden Nachregulierbarkeit der Kraft, z.B. bei Verschleiß des Kreuzungsfahrdrahtes, ermöglicht.

Besonders bevorzugt beträgt die Kraft wenigstens 5 Newton an jedem Berührungs- bzw. Kontaktpunkt, da ab diesem Wert die Kontaktkraft genügend groß ist, so dass sich der Übergangswiderstand stark verringert und somit wiederum die Entstehung von Lichtbögen signifikant reduziert wird.

Um eine genügend große Kontaktkraft über die gesamte Länge des Kreuzungsstabs sowie ein gleichmäßigeres Verspannen des Kreuzungsfahrdrahts gewährleisten zu können, ist es besonders vorteilhaft mehrere Befestigungsvorrichtungen über die Länge des Kreuzungsstabs verteilt vorzusehen. Hier sind beispielsweise Befestigungsvorrichtungen insbesondere am Anfang und Ende des Kreuzungsstabes, bzw. zusätzlich in der Mitte, bzw. beispielsweise in regelmäßigen Abständen vorteilhaft. Bei Bedarf können aber beliebig viele Befestigungsvorrichtungen pro Kreuzungsstab in beliebigen, unterschiedlichen Abständen angebracht, bzw. vorgesehen werden.

Nach einer weiteren, besonders bevorzugten Ausführung der Erfindung wird der Kreuzungsstab, der Kreuzungsfahrdraht und der Hauptfahrdraht aus einer hochfesten Kupferlegierung größer als 450 MPa hergestellt. Dadurch und insbesondere zusammen mit dem Verspannen der Leiter verringert sich der elektrische Verschleiß wesentlich. Dies ist besonders vorteilhaft, weil üblicherweise der elektrische Verschleiß den mechanischen Verschleiß um das 20fache überschreiten kann, sodass sich auch der Gesamtverschleiß, der sowohl mechanische als auch elektrische Ursachen hat, wesentlich verringert.

Nach einer weiteren bevorzugten Ausführung der Erfindung wird außerhalb des Bereichs des Kreuzungsstabs wenigstens ein Stromverbinder zwischen dem Kreuzungsfahrdraht und dem Hauptfahrdraht angeordnet ist, wobei dieser bevorzugt in einem Abstand von kleiner oder gleich 50m vom Kreuzungsstab entfernt angeordnet ist. Besonders bevorzugt ist beiderseits des Bereichs des Kreuzungsstabs in dessen unmittelbarer Nähe jeweils ein Stromverbinder angeordnet. Dadurch wird vorteilhafterweise die Induktivität der Leiterschleife und damit die Energie der Lichtbögen zwischen Kreuzungsstab, Kreuzungsfahrdraht und Hauptgleisfahrdraht verringert, wodurch sich auch der Verschleiß entsprechend verringert.

In einer weiteren Ausführungsform könnte der Kreuzungsstab vertikal zweigeteilt und die beiden Teile zueinander vertikal verschiebbar ausgeführt werden. Damit hierzu ein ständiger Kontaktdruck, bzw. eine korrespondierende Kontaktkraft anliegt, wird dazu eine geeignete Feder, bzw. über die Länge des Stabes mehrere parallel geschaltete Federn verwendet, sodass ein gleichmäßigeres Verspannen des Kreuzungsfahrdrahtes erreicht wird.

Zusammengefasst ermöglicht die Erfindung eine Verringerung des Verschleißes durch Vermeidung von Luftstrecken und Verringerung des Übergangswiderstandes zwischen den Leitern, wodurch sich die Lebensdauer der Fahrdrahtkreuzungen signifikant erhöht und sich somit insbesondere die Instandsetzungszyklen verlängern und die Instandhaltungskosten verringern. Des Weiteren können Bestandsanlagen ohne größere Umbauten erfindungsgemäß nachgerüstet werden. Ein aufwändiger und kostenintensiver Umbau von Bestandsanlagen auf eine tangentiale Bespannung, die zudem eine u.U. lange Betriebsunterbrechung nach sich zieht, kann dadurch vermieden werden.

Im Weiteren werden bevorzugte Ausführungsbeispiele der Erfindung mit Bezugnahme auf die Zeichnungen näher erläutert. Es zeigen:
- Fig. 1: eine schematische Darstellung eines Kreuzungsbereichs einer Oberleitungsanlage in Draufsicht,
- Fig. 2: einen Querschnitt eines Kreuzungsbereichs, bestehend aus Kreuzungsstab, Kreuzungsfahrdraht und Hauptfahrdraht und
- Fig. 3: ein Ausführungsbeispiel eines Querschnitts eines Kreuzungsbereichs mit einer erfindungsgemäßen Befestigungsvorrichtung.

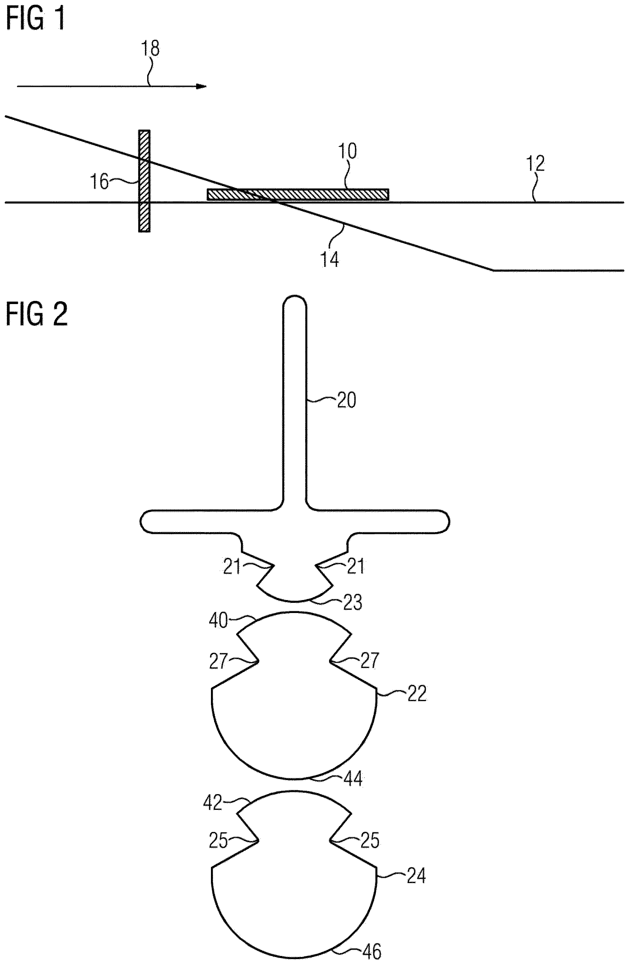

Fig. 1 zeigt eine schematische Darstellung eines Kreuzungsbereichs einer Oberleitungsanlage in Draufsicht.

Der Kreuzungsstab 10 ist hierbei mit dem Hauptfahrdraht 12 mittels Befestigungsklemmen und/oder mit wenigstens einer erfindungsgemäßen Befestigungsvorrichtung (beide nicht dargestellt) verbunden. Beide werden vom Kreuzungsfahrdraht 14 gekreuzt. Ein Fahrzeug, insbesondere Schienenfahrzeug, symbolisiert durch den Stromabnehmer 16, der im Kreuzungsbereich von unten gleichzeitig den jeweils stromdurchflossenen Kreuzungsfahrdraht 14 und den Hauptfahrdraht 12 berührt, bewegt sich von links nach rechts (Fahrtrichtung 18) vor dem Kreuzungsbereich entlang des Hauptfahrdrahts 12 und nach Passieren des Kreuzungsbereichs, z.B. auf Schienenstrecken nach Passieren einer Weiche, weiter entlang des Kreuzungsfahrdrahts 14.

Fig. 2 zeigt einen Querschnitt eines Kreuzungsbereichs, bestehend aus Kreuzungsstab 20, Kreuzungsfahrdraht 22 und Hauptfahrdraht 24.

Der Kreuzungsstab 20 ist dabei üblicherweise mit dem Hauptfahrdraht 24 mittels Befestigungsklemmen, die sich an beiden Enden des Kreuzungsstabs 20 befinden (nicht dargestellt), verbunden, wodurch zwischen der Unterseite 23 des Kreuzungsstabs 20 und der Oberseite 42 des Hauptfahrdrahts 24 eine Lücke bzw. ein Fenster entsteht, wobei dessen Abmessung, bzw. der Abstand zwischen Kreuzungsstabunterkante 23 und Hauptfahrdrahtoberkante 42 größer als der Durchmesser des Kreuzungsfahrdrahtes 44 ist, welches seitlich rechts und links durch die beiden Befestigungsklemmen begrenzt wird und in dieser Darstellung ebenfalls nicht zu sehen ist. Der Kreuzungsfahrdraht 22 kreuzt dabei den Kreuzungsstab 20 und den Hauptfahrdraht 24 in diesem Fenster.

Der Kreuzungsstab 20 weist gegenüberliegende Befestigungsrillen 21 sowie eine Unterseite 23 auf, wobei die Unterseite 23 der Oberseite 40 des Kreuzungsfahrdrahts 22 gegenüberliegt. Der Kreuzungsfahrdraht 22 weist ebenfalls gegenüberliegende Befestigungsrillen 27 sowie eine Unterseite 44 auf, die wiederum der Oberseite 42 des Hauptfahrdrahts 24 gegenüberliegt. Der Hauptfahrdraht 24 weist ebenfalls gegenüberliegende Befestigungsrillen 25 sowie eine Unterseite 46 auf. Die Befestigungsklammern greifen dabei in die Befestigungsrillen 21 des Kreuzungsstabs 20 sowie in die Befestigungsrillen 25 des Hauptfahrdrahts 24 ein. Kreuzungsfahrdraht 22 und Hauptfahrdraht 24 sind üblicherweise als blanke Leiter ausgeführt. Bei der Durchfahrt von Schienenfahrzeugen im Kreuzungsbereich mit vergleichsweise hohen Befahrgeschwindigkeiten kommt es infolge von entstehenden Schwingungen teilweise zu größeren Bewegungen der zwei Fahrdrähte gegeneinander, so dass sich beide stromführenden Fahrdrähte ggf. unkontrolliert berühren.

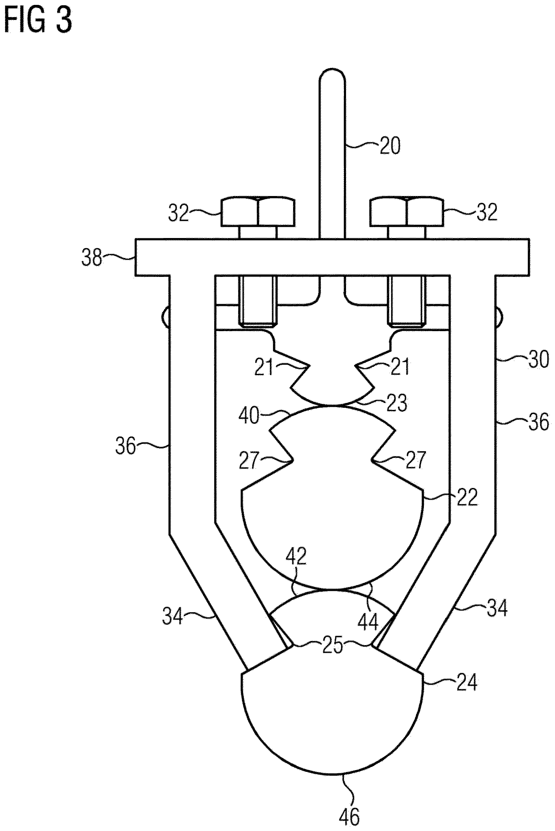

Um dies zu vermeiden, wird erfindungsgemäß eine geeignete Befestigungsvorrichtung 30 vorgeschlagen. In der Figur 3 wird ein entsprechendes Ausführungsbeispiel hierzu dargestellt.

Fig. 3 zeigt eine erfindungsgemäße Befestigungsvorrichtung 30, mittels derer der Kreuzungsfahrdraht 22 zwischen dem Kreuzungsstab 20 und dem Hauptfahrdraht 24 eingespannt bzw. eingeklemmt wird und somit der Kreuzungsstab 20 mittels der Befestigungsvorrichtung 30 mit dem Hauptfahrdraht 24 verbunden ist. Die Befestigungsvorrichtung 30 besteht dabei aus einer Justierungsbasis 38, an deren Enden sich zwei Führungen 36 befinden, die sich parallel zueinander von der Justierungsbasis 38 weg in Richtung Hauptfahrdraht 24 erstrecken, wobei der Abstand zwischen den beiden Führungen 36 so groß ist, dass sie den Kreuzungsfahrdraht 22 nicht berühren. Die beiden Führungen 36 gehen etwa auf Höhe der Mitte des Kreuzungsfahrdrahts 22 in jeweils einen, zu den Führungen 36 abgewinkelten Klemmschenkel 34 über, die sich bis zu den Befestigungsrillen 25 des Hauptfahrdrahts 24 erstrecken und sich dort entsprechend abstützen. Bei der in der Fig. 3 gezeigten Ausführungsform der Befestigungsvorrichtung 30 ist der Abstand zwischen dem Kreuzungsstab 20 und dem Hauptfahrdraht 24, insbesondere zwischen Kreuzungsstabunterkante 23 und Hauptfahrdrahtoberkante 42, mittels zweier Schrauben 32 einstellbar, wodurch sowohl eine wesentlich exaktere Justierung als auch die Möglichkeit einer entsprechenden Nachregulierbarkeit des Abstandes, z.B. bei Verschleiß des Kreuzungsfahrdrahtes 22, gewährleistet ist. Dabei stützen sich die beiden Schrauben 32, die mittels nicht dargestellter Bohrungen durch die Justierbasis 38 geführt sind, als Bestandteile der Befestigungsvorrichtung 30 hierzu auf jeweils einer Seite des Kreuzungsstabs 20 ab. Durch Drehung der Schrauben 32 ist so der gewünschte Abstand zwischen Kreuzungsstabunterkante 23 und Hauptfahrdrahtoberkante 42 einstellbar. Dadurch wird insbesondere erreicht, dass sich der Kreuzungsstab 20 und der Kreuzungsfahrdraht 22 sowie der Kreuzungsfahrdraht 22 und der Hauptfahrdraht 24 jeweils in wenigstens einem Punkt berühren.

Durch das Verspannen der stromführenden Leiter mittels der Befestigungsvorrichtung 30, also des Kreuzungsfahrdrahts 22 zwischen Kreuzungsstab 20 und Hauptfahrdraht 24 wird insbesondere eine entsprechende Kontaktkraft zwischen den Leitern an den jeweiligen Kontakt- bzw. Berührungspunkten aufgebaut, mittels der an den Kontakt- bzw. Berührungspunkten jeweils ein leitender, stromfester Kontakt entsteht, und die mittels der Schrauben 32 analog zum einstellbaren Abstand ebenfalls einstellbar ist. Somit wird sowohl eine wesentlich exaktere Justierung der Kraft auf die oben genannten Berührungs- bzw. Kontaktpunkte als auch die Möglichkeit einer entsprechenden Nachregulierbarkeit der Kraft, z.B. bei Verschleiß des Kreuzungsfahrdrahtes 22 ermöglicht.

Ist der kürzeste Abstand zwischen der Unterseite 23 des Kreuzungsstabs 20 und der Oberseite 42 des Hauptfahrdrahts 24 höchstens gleich oder insbesondere kleiner als der Durchmesser des Kreuzungsfahrdrahts 22 zwischen dessen Oberseite 40 und dessen Unterseite 44, erhöht sich entsprechend die Kontaktkraft an den Berührungsstellen 23 und 40 sowie 44 und 42, wodurch der Übergangswiderstand verringert und somit wiederum die Entstehung von Lichtbögen vermieden, bzw. zumindest reduziert wird. Um die Entstehung von Lichtbögen zu minimieren, ist es besonders vorteilhaft, wenn der kürzeste Abstand zwischen der Unterseite 23 des Kreuzungsstabs 20 und der Oberseite 42 des Hauptfahrdrahts 24 im Bereich zwischen 0,1 bis 5mm geringer als der Durchmesser des Kreuzungsfahrdrahts 22 zwischen dessen Oberseite 40 und dessen Unterseite 44 ist, da in diesem Bereich eine besonders optimale Kontaktkraft aufgebaut werden kann. Dabei ist eine Kontaktkraft von wenigstens 5 Newton an jedem Kontakt- bzw. Berührungspunkt vorgesehen.

Form und Abmessungen der hier dargestellten Teile 32, 34, 36, 38 der Befestigungsvorrichtung 30, insbesondere der jeweilige Winkel zwischen den Führungen 36 und den Klemmschenkel 34 oder die Position, an der die Klemmschenkel 34 von den Führungen 36 zum Hauptfahrdraht 24 abknicken ist lediglich beispielhaft und in keiner Weise beschränkend hinsichtlich der erfindungsgemäßen Ausführungsform.

Bei einer weiteren, hier nicht gezeigten, alternativen Ausführungsform der Befestigungsvorrichtung 30 ist der Abstand zwischen Kreuzungsstabunterkante 23 und Hauptfahrdrahtoberkante 42 nicht einstellbar, d.h. diese Befestigungsvorrichtung weist keine Schrauben 32 auf, ist ansonsten aber gleich zur Befestigungsvorrichtung 30 aufgebaut. Bei dieser nicht dargestellten Ausführungsform ist der Kreuzungsfahrdraht 22 zwischen dem Kreuzungsstab 20 und dem Hauptfahrdraht 24 mittels der Befestigungsvorrichtung ebenfalls entsprechend der dargestellten Ausführungsform eingespannt, bzw. verspannt, bzw. eingeklemmt, weil der kürzeste Abstand zwischen der Unterseite 23 des Kreuzungsstabs 20 und der Oberseite 42 des Hauptfahrdrahts 24 höchstens gleich oder kleiner als der Durchmesser des Kreuzungsfahrdrahts 22 zwischen dessen Oberseite 40 und dessen Unterseite 44 ist. Besonders vorteilhaft ist die nicht dargestellte Ausführungsform der Befestigungsvorrichtung derart aufgebaut, dass der kürzeste Abstand zwischen der Unterseite 23 des Kreuzungsstabs 20 und der Oberseite 42 des Hauptfahrdrahts 24 im Bereich zwischen 0,1 bis 5mm geringer als der Durchmesser des Kreuzungsfahrdrahts 22 zwischen dessen Oberseite 40 und dessen Unterseite 44 ist. Dadurch wird auch bei dieser Ausführungsform erreicht, dass sich der Kreuzungsstab 20 und der Kreuzungsfahrdraht 22 sowie der Kreuzungsfahrdraht 22 und der Hauptfahrdraht 24 jeweils in wenigstens einem Punkt berühren.

Auch hier wird durch das Verspannen der stromführenden Leiter mittels der Befestigungsvorrichtung, also des Kreuzungsfahrdrahts 22 zwischen Kreuzungsstab 20 und Hauptfahrdraht 24 eine entsprechende Kontaktkraft zwischen den Leitern an den jeweiligen Kontakt- bzw. Berührungspunkten aufgebaut, mittels der an den Kontakt- bzw. Berührungspunkten jeweils ein leitender, stromfester Kontakt entsteht. Auch hier ist es analog zur in der Fig. 3 dargestellten Befestigungsvorrichtung 30 besonders vorteilhaft, wenn der kürzeste Abstand zwischen der Unterseite 23 des Kreuzungsstabs 20 und der Oberseite 42 des Hauptfahrdrahts 24 im Bereich zwischen 0,1 bis 5mm geringer als der Durchmesser des Kreuzungsfahrdrahts 22 zwischen dessen Oberseite 40 und dessen Unterseite 44 ist, da in diesem Bereich eine besonders optimale Kontaktkraft aufgebaut wird und somit die Entstehung von Lichtbögen signifikant verringert werden kann.

Um eine genügend große Kontaktkraft über die gesamte Länge des Kreuzungsstabs 20 sowie ein gleichmäßigeres Verspannen des Kreuzungsfahrdrahts 22 gewährleisten zu können, ist es besonders vorteilhaft mehrere Befestigungsvorrichtungen 30 über die Länge des Kreuzungsstabs 20 verteilt vorzusehen. Hier sind beispielsweise Befestigungsvorrichtungen 30 insbesondere am Anfang und Ende des Kreuzungsstabes 20, bzw. zusätzlich in der Mitte, bzw. beispielsweise in regelmäßigen Abständen vorteilhaft. Bei Bedarf können aber beliebig viele Befestigungsvorrichtungen 30 pro Kreuzungsstab 20 in beliebigen, unterschiedlichen Abständen angebracht, bzw. vorgesehen werden. Dies gilt für alle beschriebenen Ausführungsformen der Erfindung.

Bei allen beschriebenen Ausführungsformen der Erfindung ist es außerdem vorteilhaft, wenn der Kreuzungsstab 20, der Kreuzungsfahrdraht 22 und der Hauptfahrdraht 24 aus einer hochfesten Kupferlegierung größer als 450 MPa hergestellt ist, weil sich dadurch und insbesondere zusammen mit dem Verspannen der Leiter der elektrische Verschleiß wesentlich verringert. Da üblicherweise der elektrische Verschleiß den mechanischen Verschleiß um das 20fache überschreiten kann, kann dadurch insbesondere der Gesamtverschleiß, der sowohl mechanische als auch elektrische Ursachen hat, signifikant verringert werden.

Neben den beiden bereits beschriebenen Ausführungsformen sind aber auch alle adäquaten, anderen Lösungen, wie z.B. der Einsatz von Federn, etc. (hier nicht dargestellt) denkbar und möglich. So kann beispielsweise der Kreuzungsstab 20 über eine oder mehrere, vertikale Feder(n) gegen den Kreuzungsfahrdraht 22 gepresst werden, sodass dessen Einspannkraft auch bei Querschnittsminderung bei Verschleiß annähernd gleich ist. Die Federkraft kann wiederum ebenfalls justierbar gestaltet sein. Die Federn können dabei an den Befestigungen des Kreuzungsstabes 20 auf dem Hauptfahrdraht 24 angeordnet sein.

Weiterhin kann beispielsweise auch der Kreuzungsstab 20 beidseitig auf Gewindebolzen oder eine Kulissenführung aufgesetzt werden, die mit dem Hauptfahrdraht 24 verklemmt werden, wodurch wiederum der Kreuzungsfahrdraht 22 entsprechend eingeklemmt wird und somit auch der Kontakt, insbesondere die notwendige Kontaktkraft zwischen den Leitern hergestellt werden kann.

In einer weiteren, ebenfalls nicht dargestellten Ausführungsform könnte der Kreuzungsstab 20 vertikal zweigeteilt und die beiden Teile zueinander vertikal verschiebbar ausgeführt werden. Damit hierzu ein ständiger Kontaktdruck bzw. eine korrespondierende Kontaktkraft anliegt, wird dazu eine geeignete Feder, bzw. über die Länge des Kreuzungsstabes mehrere parallel geschaltete Federn verwendet, sodass ein gleichmäßigeres Verspannen des Kreuzungsfahrdrahtes 24 erreicht wird.

Zusätzlich zu allen beschriebenen Ausführungsformen kann außerhalb des Kreuzungsbereichs, also insbesondere, außerhalb des Bereichs des Kreuzungsstabs 20 beiderseits jeweils ein Stromverbinder zwischen dem Kreuzungsfahrdraht und dem Hauptfahrdraht in einem Abstand von kleiner oder gleich 50m vom Kreuzungsstab entfernt angeordnet werden, wodurch vorteilhafterweise der Stromfluss zwischen Kreuzungsstab 20, Kreuzungsfahrdraht 22 und Hauptfahrdraht 24 verringert wird. Besonders vorteilhaft sind die beiderseits angebrachten Stromverbinder in unmittelbarer Nähe des Kreuzungsstabs 20 angebracht.

## Patentansprüche

1. Oberleitungsanlage mit wenigstens einem Hauptfahrdraht (12), wenigstens einem Kreuzungsfahrdraht (14) und wenigstens einem Kreuzungsstab (10), wobei der Kreuzungsstab (10) mittels wenigstens einer Befestigungsvorrichtung (30) mit dem Hauptfahrdraht (12) verbunden ist, wobei sich der Hauptfahrdraht (12) und der Kreuzungsfahrdraht (14) im Bereich des Kreuzungsstabs (10) kreuzen und wobei der Kreuzungsfahrdraht (14) zwischen dem Kreuzungsstab (10) und dem Hauptfahrdraht (12) verläuft,
**dadurch gekennzeichnet, dass**
die wenigstens eine Befestigungsvorrichtung (30) den Kreuzungsfahrdraht (14) zwischen dem Kreuzungsstab (10) und dem Hauptfahrdraht (12) zumindest im Bereich des Kreuzungsstabs (10) einspannt.

2. Oberleitungsanlage nach Anspruch 1,
**dadurch gekennzeichnet, dass**
der Kreuzungsfahrdraht (14) mittels der wenigstens einen Befestigungsvorrichtung (30) derart zwischen dem Kreuzungsstab (10) und dem Hauptfahrdraht (12) eingespannt ist, dass sich der Kreuzungsstab (10) und der Kreuzungsfahrdraht (14) und der Kreuzungsfahrdraht (14) und der Hauptfahrdraht (12) in jeweils wenigstens einem Punkt berühren.

3. Oberleitungsanlage nach Anspruch 1 oder 2,
**dadurch gekennzeichnet, dass**
der kürzeste Abstand zwischen der Unterseite (23) des Kreuzungsstabs und der Oberseite (42) des Hauptfahrdrahts (24) höchstens gleich oder kleiner als der Durchmesser des Kreuzungsfahrdrahts (14) zwischen der Oberseite (40) und der Unterseite (44) ist.

4. Oberleitungsanlage nach Anspruch 3,
**dadurch gekennzeichnet, dass**
der kürzeste Abstand im Bereich zwischen 0,1 bis 5 mm geringer als der Durchmesser des Kreuzungsfahrdrahts (14) zwischen der Oberseite (40) und der Unterseite (44) ist.

5. Oberleitungsanlage nach Anspruch 1,
**dadurch gekennzeichnet, dass**
der Abstand zwischen dem Kreuzungsstab (10) und dem Hauptfahrdraht (12) mittels der wenigstens einen Befestigungsvorrichtung (30) einstellbar ist.

6. Oberleitungsanlage nach Anspruch 5,
**dadurch gekennzeichnet, dass**
die wenigstens eine Befestigungsvorrichtung (30) wenigstens zwei Schrauben aufweist, mittels derer der Abstand zwischen dem Kreuzungsstab (10) und dem Hauptfahrdraht (12) einstellbar ist.

7. Oberleitungsanlage nach einem der vorherigen Ansprüche,
**dadurch gekennzeichnet, dass**
mittels der wenigstens einen Befestigungsvorrichtung (30) eine Kraft auf die Berührungspunkte zwischen dem Kreuzungsstab (10) und dem Kreuzungsfahrdraht (14) und dem Kreuzungsfahrdraht (14) und dem Hauptfahrdraht (12) ausübbar ist.

8. Oberleitungsanlage nach Anspruch 7,
**dadurch gekennzeichnet, dass**
die Kraft, die auf die Berührungspunkte zwischen dem Kreuzungsstab (10) und dem Kreuzungsfahrdraht (14) und dem Kreuzungsfahrdraht (14) und dem Hauptfahrdraht (12) ausgeübt wird, einstellbar ist.

9. Oberleitungsanlage nach Anspruch 7 oder 8,
**dadurch gekennzeichnet, dass**
die Kraft wenigstens 5 Newton an jedem Berührungspunkt beträgt.

10. Oberleitungsanlage nach einem der Ansprüche 7 bis 9,
**dadurch gekennzeichnet, dass**
die Kraft mittels Schrauben oder Federn ausübbar ist.

11. Oberleitungsanlage nach einem der vorherigen Ansprüche,
**dadurch gekennzeichnet, dass**
der Kreuzungsstab (10), der Kreuzungsfahrdraht (14) und der Hauptfahrdraht (12) aus einer hochfesten Kupferlegierung größer als 450 MPa hergestellt wird.

12. Oberleitungsanlage nach einem der vorherigen Ansprüche,
**dadurch gekennzeichnet, dass**
außerhalb des Bereichs des Kreuzungsstabs (10) wenigstens ein Stromverbinder zwischen dem Kreuzungsfahrdraht (14) und dem Hauptfahrdraht (12) angeordnet ist.

13. Oberleitungsanlage nach Anspruch 12,
**dadurch gekennzeichnet, dass**
der wenigstens eine Stromverbinder in einem Abstand von kleiner oder gleich 50 m vom Kreuzungsstab (10) entfernt angeordnet ist.

14. Oberleitungsanlage nach Anspruch 12 oder 13,
**dadurch gekennzeichnet, dass**
beiderseits des Bereichs des Kreuzungsstabs (10) in dessen unmittelbarer Nähe jeweils ein Stromverbinder angeordnet ist.

## Claims

1. Overhead line system with at least one main contact wire (12), at least one crossing contact wire (14) and at least one crossing rod (10), wherein the crossing rod (10) is connected to the main contact wire (12) by means of at least one fastening apparatus (30), wherein the main contact wire (12) and the crossing contact wire (14) cross in the region of the crossing rod (10) and wherein the crossing contact wire (14) runs between the crossing rod (10) and the main contact wire (12),
**characterised in that**
the at least one fastening apparatus (30) clamps the crossing contact wire (14) between the crossing rod (10) and the main contact wire (12), at least in the region of the crossing rod (10) .

2. Overhead line system according to claim 1,
**characterised in that**
the crossing contact wire (14) is clamped between the crossing rod (10) and the main contact wire (12) by means of the at least one fastening apparatus (30) in such a manner that the crossing rod (10) and the crossing contact wire (14) and the crossing contact wire (14) and the main contact wire (12) are in contact at at least one point in each case.

3. Overhead line system according to claim 1 or 2,
**characterised in that**
the shortest distance between the lower side (23) of the crossing rod and the upper side (42) of the main contact wire (24) is at most equal to or less than the diameter of the crossing contact wire (14) between the upper side (40) and the lower side (44).

4. Overhead line system according to claim 3,
**characterised in that**
the shortest distance is in the range of between 0.1 to 5 mm less than the diameter of the crossing contact wire (14) between the upper side (40) and the lower side (44).

5. Overhead line system according to claim 1,
**characterised in that**
the distance between the crossing rod (10) and the main contact wire (12) can be set by means of the at least one fastening apparatus (30).

6. Overhead line system according to claim 5,
**characterised in that**
the at least one fastening apparatus (30) has at least two screws, by means of which the distance between the crossing rod (10) and the main contact wire (12) can be set.

7. Overhead line system according to one of the preceding claims,
**characterised in that**
it is possible to exert a force upon the contact points between the crossing rod (10) and the crossing contact wire (14) and the crossing contact wire (14) and the main contact wire (12) by means of the at least one fastening apparatus (30) .

8. Overhead line system according to claim 7,
**characterised in that**
it is possible to set the force that is exerted upon the contact points between the crossing rod (10) and the crossing contact wire (14) and the crossing contact wire (14) and the main contact wire (12).

9. Overhead line system according to claim 7 or 8,
**characterised in that**
the force amounts to at least 5 newtons at each contact point.

10. Overhead line system according to one of claims 7 to 9,
**characterised in that**
the force can be exerted by means of screws or springs.

11. Overhead line system according to one of the preceding claims,
**characterised in that**
the crossing rod (10), the crossing contact wire (14) and the main contact wire (12) are produced from a high-strength copper alloy greater than 450 MPa.

12. Overhead line system according to one of the preceding claims,
**characterised in that**
at least one current connector between the crossing contact wire (14) and the main contact wire (12) is arranged outside the region of the crossing rod (10).

13. Overhead line system according to claim 12,
**characterised in that**
the at least one current connector is arranged at a distance of less than or equal to 50 m away from the crossing rod (10).

14. Overhead line system according to claim 12 or 13,
**characterised in that**
a current connector is arranged in each case on both sides of the region of the crossing rod (10), in the immediate vicinity thereof.

## Revendications

1. Installation de ligne aérienne comprenant au moins un fil (12) de contact principal, au moins un fil (14) de contact de croisement et au moins un barreau (10) de croisement, dans laquelle le barreau (10) de croisement est relié au fil (12) de contact principal au moyen d'au moins un système (30) de fixation, dans laquelle le fil (12) de contact principal et le fil (14) de contact de croisement se croisent dans la partie du barreau (10) de croisement et dans laquelle le fil (14) de contact de croisement s'étend entre le barreau (10) de croisement et le fil (12) de contact principal,
**caractérisée en ce que**
le au moins un système (30) de fixation bloque, au moins dans la partie du barreau (10) de croisement, le fil (14) de contact de croisement entre le barreau (10) de croisement et le fil (12) de contact principal.

2. Installation de ligne aérienne suivant la revendication 1,
**caractérisée en ce que**
le fil (14) de contact de croisement est bloqué au moyen du au moins un système (30) de fixation entre le barreau (10) de croisement et le fil (12) de contact principal, de manière à ce que le barreau (10) de croisement et le fil (14) de contact de croisement et à ce que le fil (14) de contact de croisement et le fil (12) de contact principal se touchent en respectivement au moins un point.

3. Installation de ligne aérienne suivant la revendication 1 ou 2,
**caractérisée en ce que**
la distance la plus courte, entre le côté (23) inférieur du barreau de croisement et le côté (42) supérieur du fil (24) de contact principal, est au plus inférieure ou égale au diamètre du fil (14) de contact de croisement entre le côté (40) supérieur et le côté (44) inférieur.

4. Installation de ligne aérienne suivant la revendication 3,
**caractérisée en ce que**
la distance la plus courte est, dans la plage allant de 0,1 à 5 mm, plus petite que le diamètre du fil (14) de contact de croisement entre le côté (40) supérieur et le côté (44) inférieur.

5. Installation de ligne aérienne suivant la revendication 1,
**caractérisée en ce que**
la distance entre le barreau (10) de croisement et le fil (12) de contact principal est réglable au moyen du au moins un système (30) de fixation.

6. Installation de ligne aérienne suivant la revendication 5,
**caractérisée en ce que**
le au moins un système (30) de fixation comporte au moins deux vis, au moyen desquelles la distance entre la barreau (10) de croisement et le fil (12) de contact principal est réglable.

7. Installation de ligne aérienne suivant l'une des revendications précédentes,
**caractérisée en ce qu'**
au moyen d'au moins un système (30) de fixation, une force peut être appliquée aux points de contact entre le barreau (10) de croisement et le fil (14) de contact de croisement et le fil (14) de contact de croisement et le fil (12) de contact principal.

8. Installation de ligne aérienne suivant la revendication 7,
**caractérisée en ce que**
la force, qui s'applique aux points de contact entre le barreau (10) de croisement et le fil (14) de contact de croisement et le fil (14) de contact de croisement et le fil (12) de contact principal, est réglable.

9. Installation de ligne aérienne suivant la revendication 7 ou 8,
**caractérisée en ce que**
la force est d'au moins 5 newtons en chaque point de contact.

10. Installation de ligne aérienne suivant l'une des revendications 7 à 9,
**caractérisée en ce que**
la force peut être appliquée au moyen de vis ou de ressorts.

11. Installation de ligne aérienne suivant l'une des revendications précédentes,
**caractérisée en ce que**
le barreau (10) de croisement, le fil (14) de contact de croisement et le fil (12) de contact principal sont en un alliage de cuivre d'une résistance plus grande que 450 MPa.

12. Installation de ligne aérienne suivant l'une des revendications précédentes,
**caractérisée en ce qu'**
à l'extérieur de la partie du barreau (10) de croisement, au moins une connexion est montée entre le fil (14) de contact de croisement et le fil (12) de contact principal.

13. Installation de ligne aérienne suivant la revendication 12,
**caractérisée en ce que**
la au moins une connexion est montée en étant à une distance inférieure ou égale à 50 m du barreau (10) de croisement.

14. Installation de ligne aérienne suivant la revendication 12 ou 13,
**caractérisée en ce que**
respectivement une connexion est montée des deux côtés du barreau (10) de croisement dans sa proximité immédiate.
